# EUROPEAN PATENT APPLICATION

(11) **EP 4 769 103 A1**
(43) Date of publication of application: **01.07.2026**
(21) Application number: 25781667.8
(22) Date of filing: 28.03.2025
(51) Int. Cl.: G06F 3/04845, G06F 3/04817

(54) **WALLPAPER DISPLAY METHOD AND ELECTRONIC DEVICE**

(30) Priority: 30.03.2024 CN 202410389404
(71) Applicant: HUAWEI TECHNOLOGIES CO., LTD., Shenzhen 518129 (CN)
(72) Inventor: HU, Yuying, Shenzhen, Guangdong 518129 (CN); ZHANG, Jing, Shenzhen, Guangdong 518129 (CN); LIU, Anqi, Shenzhen, Guangdong 518129 (CN); DING, Chenpeng, Shenzhen, Guangdong 518129 (CN)
(74) Representative: Pfenning, Meinig & Partner mbB
(86) International application number: PCT/CN2025/085990
(87) International publication number: WO 2025/209372

(57) **Abstract**

This application provides a wallpaper display method. The method is applied to an electronic device, and includes: displaying a first interface, where the first interface includes one or more wallpaper elements located in a first region; and displaying a home screen in response to an unlock instruction, where in a process of displaying the home screen, a home screen wallpaper element in the one or more wallpaper elements is moved from the first region to a second region, where the second region is one or more regions close to a side edge of a screen, and the home screen wallpaper element is all or a part of wallpaper elements in the one or more wallpaper elements. Therefore, the electronic device may implement a process of switching between different user interfaces through a dynamic effect gradient transition, to maintain display consistency between the user interfaces and improve user experience.

## Description

### TECHNICAL FIELD

Embodiments of the present invention relate to the field of terminal technologies, and in particular, to a wallpaper display method and an electronic device.

### BACKGROUND

With rapid development of information technology, electronic devices have become indispensable tools in daily life and work of people. When using an electronic device, a user not only pursues function completeness and operation convenience, but also pays more attention to personalized experience and visual aesthetics of the device. An interface design of the electronic device, especially a wallpaper design, has become a key factor for measuring the personalized experience of the user and affecting aesthetics of a user interface.

The user interface includes not only a wallpaper but also other visual elements, such as a status bar, an application icon, a folder, and a widget. Therefore, if the wallpaper is designed to be overly complex, visual distraction may be caused to the user, and it is difficult for the user to identify another visual element on the user interface. Consequently, user experience is affected. Currently, how to balance a personalized preference of the user and an overall visual effect of the interface in the wallpaper design is one of problems that urgently need to be resolved in this field.

### SUMMARY

Embodiments of the present invention provide a wallpaper display method and an electronic device. Through implementation of the method, an electronic device can reduce visual distraction of a wallpaper as much as possible, maintain theme consistency between a lock screen wallpaper and a home screen wallpaper, support a user in personal expression, and improve overall user experience.

According to a first aspect, an embodiment of the present invention provides a wallpaper display method. The method is applied to an electronic device, and the method includes: displaying a first interface, where the first interface includes one or more wallpaper elements, and the one or more wallpaper elements are located in a first region; and displaying a home screen in response to an unlock instruction, where in a process of displaying the home screen, a home screen wallpaper element in the one or more wallpaper elements is moved from the first region to a second region, where the second region is one or more regions close to a side edge of a screen, and the home screen wallpaper element is all or a part of wallpaper elements in the one or more wallpaper elements.

The first interface may include a user interface displayed when the electronic device is in a locked state, and a user interface displayed when the electronic device is in an always-on display (always-on display, AOD) state.

Therefore, the electronic device can implement switching between different user interfaces through a dynamic effect gradient transition. In this manner, display consistency between the user interfaces can be maintained, and user experience can be improved.

With reference to the first aspect, in some implementations, the home screen wallpaper element may be determined based on a position of the one or more wallpaper elements in the first region.

With reference to the first aspect, in some implementations, a position of the home screen wallpaper element in the first region and a position of the home screen wallpaper element in the second region are located on a same side of the screen.

In this way, a length of a path on which the home screen wallpaper element is moved from the first region to the second region can be shortened as much as possible, so that moving time of the home screen wallpaper element can be shortened, and a dynamic effect delay in a user interface switching process can be avoided.

With reference to the first aspect, in some implementations, the home screen wallpaper element includes a first wallpaper element and a second wallpaper element; and if a position of the first wallpaper element in the first region is higher than a position of the second wallpaper element in the first region, a position of the first wallpaper element in the second region is also higher than a position of the second wallpaper element in the second region; or if a position of the first wallpaper element in the first region is lower than a position of the second wallpaper element in the first region, a position of the first wallpaper element in the second region is also lower than a position of the second wallpaper element in the second region.

In this way, a problem that paths of wallpaper elements are staggered in a moving process can be avoided, and an overall visual effect can be improved.

With reference to the first aspect, in some implementations, the home screen wallpaper element is in a partially displayed state in the second region; and/or home screen wallpaper elements are in an overlapping display state.

With reference to the foregoing implementation, in some examples, that the home screen wallpaper element is in the partially displayed state in the second region specifically includes: A display area of the home screen wallpaper element in the second region is greater than or equal to a first value, and/or less than or equal to a second value. The first value may be, for example, 55% of an area of the home screen wallpaper element, and the second value may be, for example, 70% of the area of the home screen wallpaper element.

With reference to the foregoing implementation, in some examples, that the home screen wallpaper elements are in the overlapping display state specifically includes: An overlapping area between the home screen wallpaper elements is less than a third value. The third value may be, for example, 40% of an area of the home screen wallpaper element.

With reference to the first aspect, in some implementations, the second region is determined based on a layout of an icon displayed on the home screen, so that the home screen wallpaper element does not block the icon on the home screen as much as possible when being displayed in the second region, and the icon includes an application icon, and/or a folder, and/or a widget, and/or a card.

With reference to the first aspect, in some implementations, before displaying the first interface, the method further includes: determining the wallpaper element in response to a user operation of selecting the wallpaper element; and determining the first interface based on the wallpaper element and a wallpaper template, where the wallpaper template is used to determine the one or more wallpaper elements and a position of the one or more wallpaper elements on the first interface based on a selection rank of the wallpaper element.

With reference to the foregoing implementation, in some examples, if an important region of the wallpaper element is blocked, the wallpaper element is rotated by using a center of the wallpaper element as an axis, and/or the wallpaper element is mirrored, and/or the wallpaper element is translated, so that the important region of the wallpaper element is displayed in the first region.

Therefore, through fine-tuning of a placement position of the wallpaper element, it can be ensured that the important region in the wallpaper element is displayed on the user interface, and a display effect of the wallpaper element is ensured.

According to a second aspect, an embodiment of this application provides a wallpaper display method. The method is applied to an electronic device, and the method includes: determining a wallpaper element in response to a user operation of selecting the wallpaper element; determining a lock screen wallpaper based on the wallpaper element; and determining a home screen wallpaper based on the lock screen wallpaper, where a wallpaper element included in the home screen wallpaper is selected from the wallpaper element included in the lock screen wallpaper, and a placement manner of the wallpaper element in the home screen wallpaper is determined based on a placement manner of the wallpaper element in the lock screen wallpaper.

With reference to the second aspect, in some implementations, the wallpaper element in the lock screen wallpaper is located in a first region in the home screen wallpaper, and the first region includes a region whose distance from a top edge and/or a bottom edge of a screen of the electronic device is greater than or equal to a first preset value, and/or whose distance from a side edge of the screen of the electronic device is less than or equal to a second preset value.

In some examples, the first preset value and/or the second preset value may be fixed values. For example, the first preset value may be 767 pixels, and the second preset value may be 50 pixels.

In some other examples, the first preset value and/or the second preset value may be values related to a length of the top edge, a length of the bottom edge, and a length of the side edge of the screen when the electronic device is in a portrait mode. For example, the first preset value may be 1/4 of the length of the side edge of the screen when the electronic device is in the portrait mode; and the second preset value may be 1/12 of the length of the top edge and/or the length of the bottom edge of the screen when the electronic device is in the portrait mode.

According to the foregoing policy, visual distraction of the lock screen wallpaper can be effectively reduced.

With reference to the second aspect, in some implementations, the wallpaper element in the home screen wallpaper is located in a second region in the home screen wallpaper, and the second region includes a region whose distance from the top edge and/or the bottom edge of the screen of the electronic device is greater than or equal to a third preset value, and/or whose distance from the side edge of the screen of the electronic device is less than or equal to a fourth preset value.

In some examples, the third preset value and/or the fourth preset value may be fixed values. For example, both the third preset value and the fourth preset value may be 50 pixels. In some other examples, the third preset value and/or the fourth preset value may be values related to the length of the side edge, the length of the top edge, or the length of the bottom edge of the screen of the electronic device. For example, the third preset value may be 1/10 of the length of the top edge or the length of the bottom edge of the screen, and the fourth preset value may be 1/12 of the length of the side edge of the screen of the electronic device.

According to the foregoing policy, visual distraction of the home screen wallpaper can be effectively reduced.

With reference to the second aspect, in some implementations, the wallpaper element included in the home screen wallpaper includes: a wallpaper element that is in one or more lock screen wallpapers and that is located in a left region, and/or a wallpaper element that is in the one or more lock screen wallpapers and that is located in a right region. The wallpaper element that is in the lock screen wallpaper and that is located in the left region is also located in a left region in the home screen wallpaper, and the wallpaper element that is in the lock screen wallpaper and that is located in the right region is also located in a right region in the home screen wallpaper.

With reference to the second aspect, in some implementations, the wallpaper element included in the home screen wallpaper includes a first wallpaper element and a second wallpaper element. If a position of the first wallpaper element in the lock screen wallpaper is higher than a position of the second wallpaper element in the lock screen wallpaper, a position of the first wallpaper element in the home screen wallpaper is also higher than a position of the second wallpaper element in the home screen wallpaper; or if a position of the first wallpaper element in the lock screen wallpaper is lower than a position of the second wallpaper element in the lock screen wallpaper, a position of the first wallpaper element in the home screen wallpaper is also lower than a position of the second wallpaper element in the home screen wallpaper.

With reference to the second aspect, in some implementations, the wallpaper element included in the home screen wallpaper is in a partially displayed state; and/or wallpaper elements included in the home screen wallpaper are in an overlapping display state.

With reference to the foregoing implementation, in some examples, that the wallpaper element included in the home screen wallpaper is in the partially displayed state specifically includes: A display area of the home screen wallpaper element is greater than or equal to a first value, and/or less than or equal to a second value. The first value may be, for example, 55% of an area of the home screen wallpaper element, and the second value may be, for example, 70% of the area of the home screen wallpaper element.

With reference to the foregoing implementation, in some examples, that the wallpaper elements included in the home screen wallpaper are in the overlapping display state specifically includes: An overlapping area between the home screen wallpaper elements is less than a third value. The third value may be, for example, 40% of an area of the home screen wallpaper element.

With reference to the second aspect, in some implementations, a placement manner of the wallpaper element in the home screen wallpaper is determined based on a layout of an icon displayed on a home screen, so that the wallpaper element in the home screen wallpaper does not block the icon on the home screen as much as possible when being displayed, where the icon includes an application icon, and/or a folder, and/or a widget, and/or a card.

With reference to the second aspect, in some implementations, the method further includes: if an important region of the wallpaper element in the home screen wallpaper is blocked, rotating the wallpaper element by using a center of the wallpaper element as an axis, and/or mirroring the wallpaper element, and/or translating the wallpaper element, so that the important region of the wallpaper element is displayed in the home screen wallpaper.

According to a third aspect, an embodiment of this application provides an electronic device. The electronic device includes a memory, a processor, and a sensor. The memory is configured to store a computer program, and the processor is configured to invoke the computer program to enable the electronic device to perform the method according to either the first aspect or the second aspect.

According to a fourth aspect, an embodiment of this application provides a computer program product including instructions. When the computer program product runs on an electronic device, the electronic device is enabled to perform the method according to either the first aspect or the second aspect.

According to a fifth aspect, an embodiment of this application provides a computer-readable storage medium, including instructions. When the instructions are run on an electronic device, the electronic device is enabled to perform the method according to either the first aspect or the second aspect.

### BRIEF DESCRIPTION OF DRAWINGS

FIG. 1A is a diagram of a structure of an electronic device 100 according to an embodiment of the present invention;
FIG. 1B is a block diagram of a software structure of an electronic device 100 according to an embodiment of the present invention;
FIG. 2A to FIG. 2E are diagrams of a scenario in which an electronic device 100 determines a wallpaper element according to an embodiment of the present invention;
FIG. 3A to FIG. 3C are diagrams of a scenario in which an electronic device 100 determines a wallpaper template according to an embodiment of the present invention;
FIG. 3D and FIG. 3E are diagrams of a scenario in which an electronic device 100 switches a wallpaper according to an embodiment of the present invention;
FIG. 4 is a schematic flowchart of a wallpaper display method according to an embodiment of the present invention;
FIG. 5 is a diagram of a first region according to an embodiment of the present invention;
FIG. 6A is a diagram of a lock screen template according to an embodiment of the present invention;
FIG. 6B-1 and FIG. 6B-2 are diagrams of lock screen templates corresponding to different quantities of wallpaper elements according to an embodiment of the present invention;

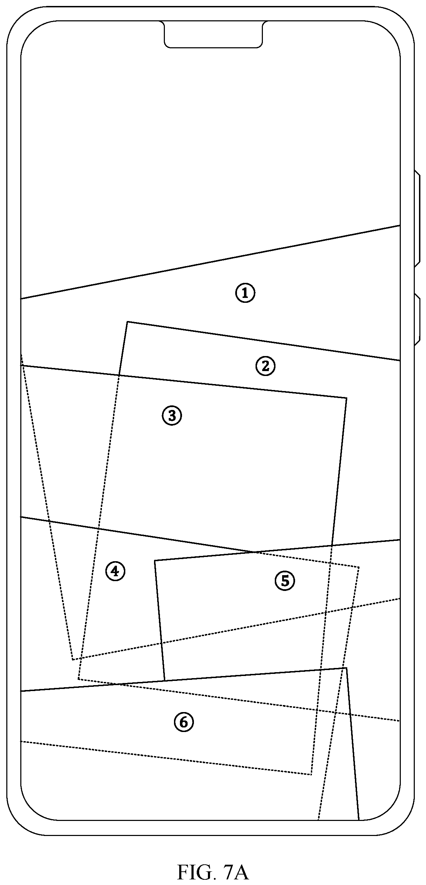

FIG. 7A to FIG. 7D are diagrams of sticker templates according to embodiments of the present invention;

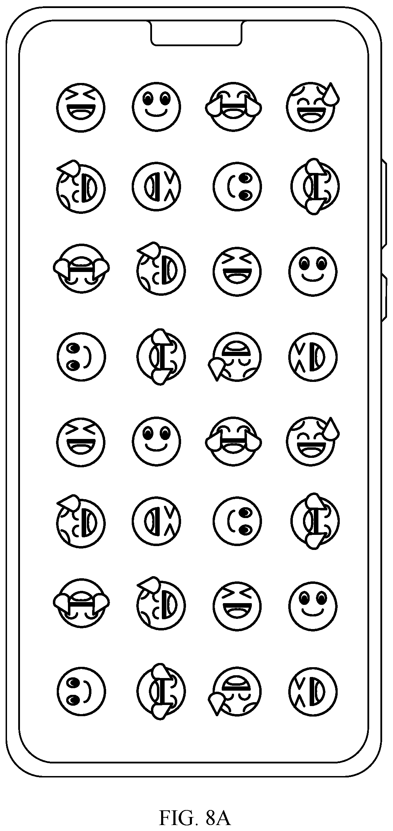

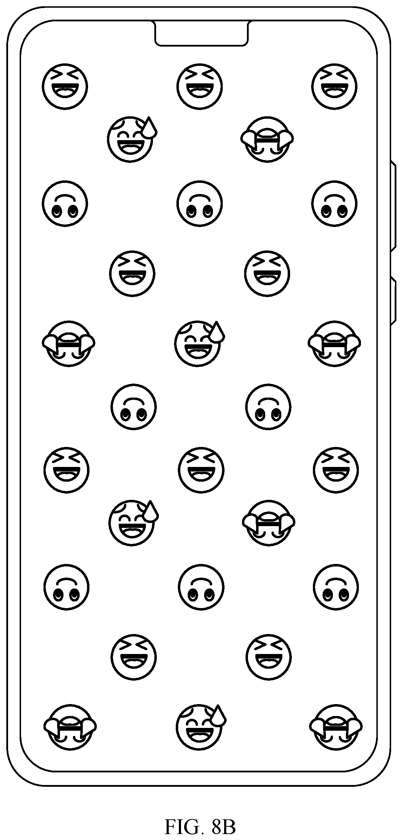

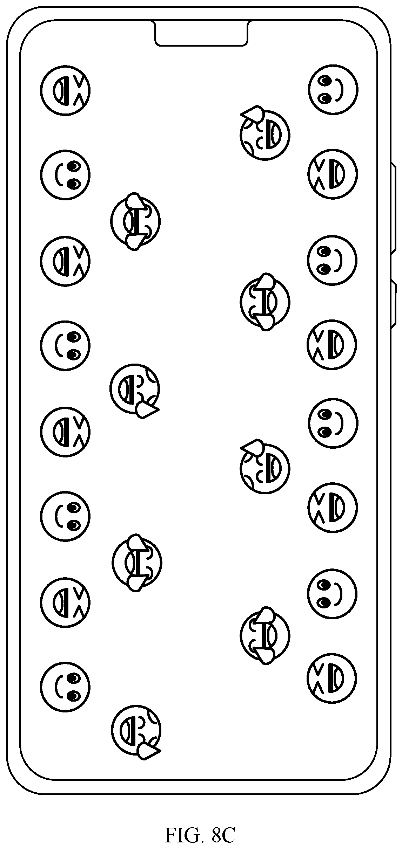

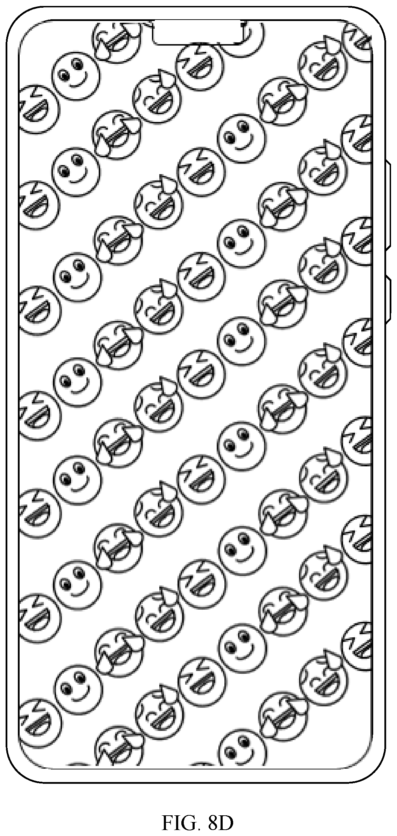

FIG. 8A to FIG. 8D are diagrams of array templates according to embodiments of the present invention;

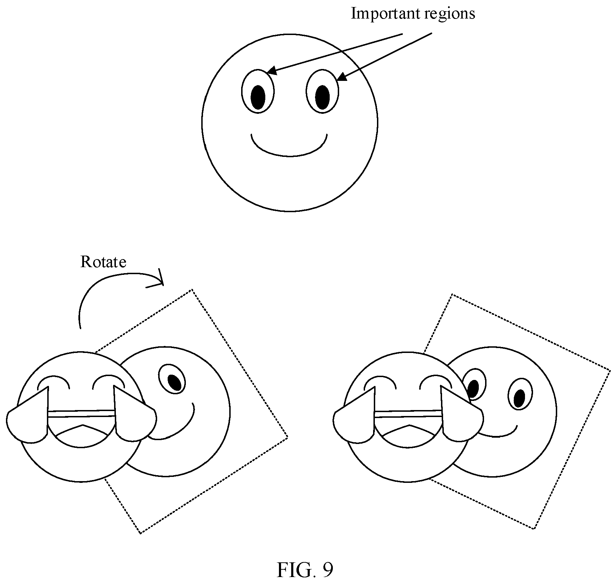

FIG. 9 is a diagram of fine-tuning a placement manner of a wallpaper element in a wallpaper according to an embodiment of the present invention;

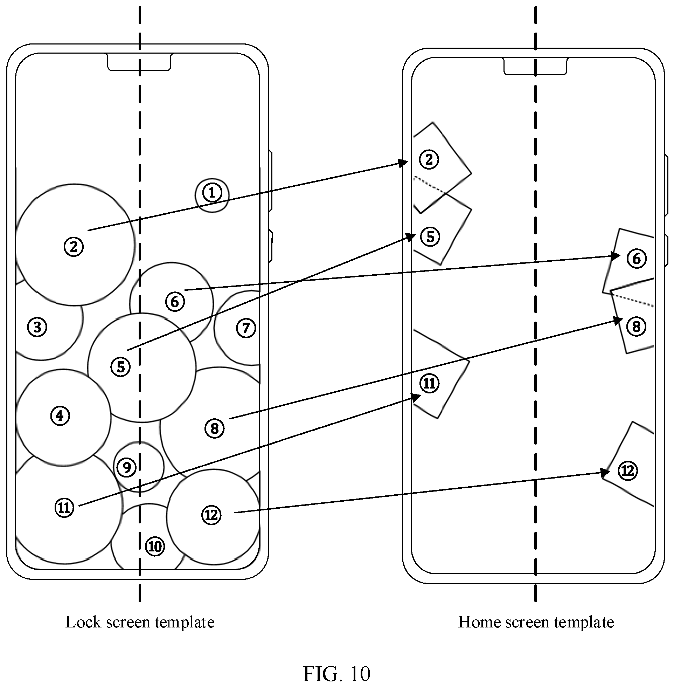

FIG. 10 is a diagram of determining a foreground of a home screen wallpaper based on a foreground of a lock screen wallpaper according to an embodiment of the present invention; and

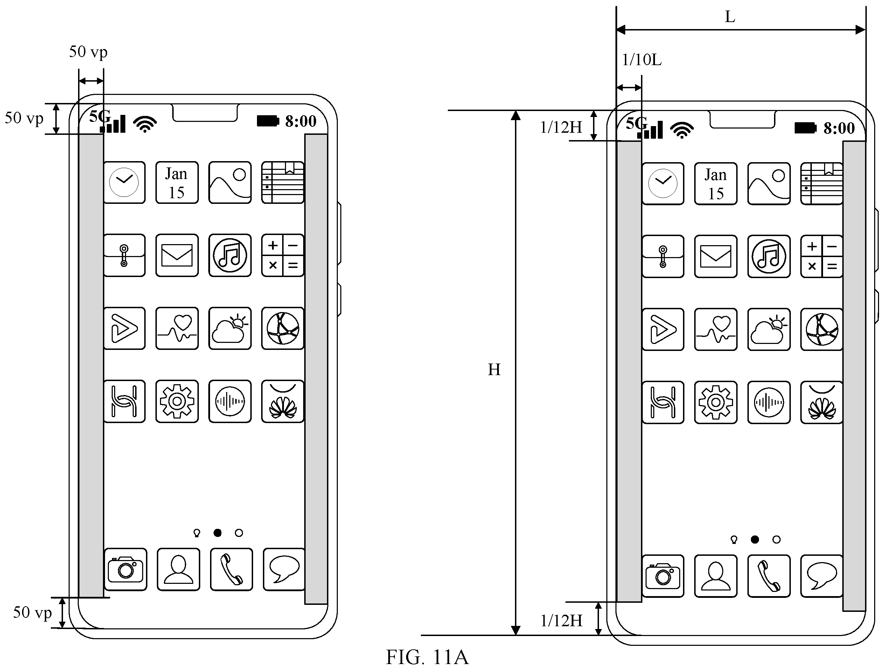

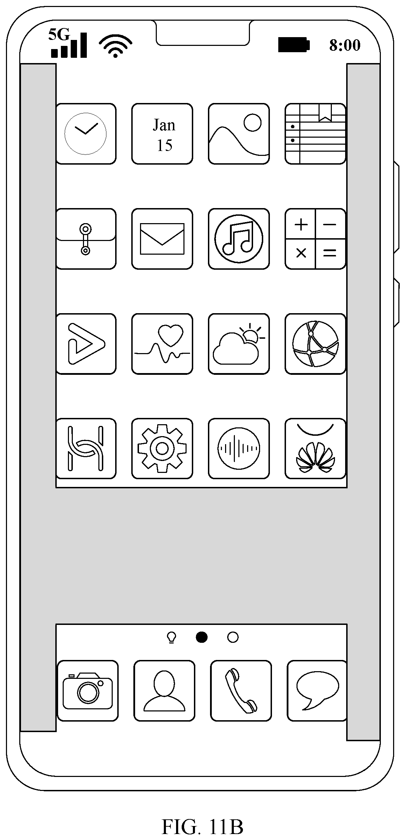

FIG. 11A and FIG. 11B are diagrams of second regions according to embodiments of the present invention.

### DESCRIPTION OF EMBODIMENTS

The following clearly describes technical solutions in embodiments of the present invention with reference to accompanying drawings in embodiments of the present invention. It is clear that the described embodiments are merely some but not all of embodiments of the present invention. All other embodiments obtained by a person of ordinary skill in the art based on the embodiments of the present invention shall fall within the protection scope of the present invention.

Based on different application interfaces, wallpapers of an electronic device may be classified into a lock screen wallpaper and a home screen wallpaper. The lock screen wallpaper is applied to a lock screen interface displayed when the electronic device is in a locked state, or an always-on display interface displayed when the electronic device is in an always-on display state. The home screen wallpaper is applied to a home screen interface displayed after the electronic device is unlocked.

Because quantities and placement positions of visual elements on the lock screen interface or the always-on display interface and the home screen interface are different, and frequencies and features of interaction actions performed by a user on the two interfaces are different, the lock screen wallpaper and the home screen wallpaper have different design requirements. For example, compared with the lock screen interface or the always-on display interface, the home screen interface may include more visual elements, such as an application icon, a folder, and a widget. In addition, interaction actions performed by the user on the home screen interface are much more frequent and more precise than those performed on the lock screen interface. Therefore, the home screen wallpaper has a higher requirement for reducing visual distraction.

Currently, to meet different requirements of wallpapers in different scenarios, the electronic device may separately determine the lock screen wallpaper and the home screen wallpaper. In this manner, theme consistency between the lock screen interface and the home screen interface is damaged to some extent, and consequently, visual experience of the user is disrupted during switching between the two interfaces. In addition, the electronic device may further obtain the home screen wallpaper by blurring the lock screen wallpaper. However, because blurring reduces clarity of details in the wallpaper, this manner may limit space for the user to perform personalized setting on the home screen wallpaper according to a personal preference. Consequently, the user cannot fully display a personality and a style of the user, thereby affecting overall user experience.

This application provides a wallpaper display method and an electronic device. Through implementation of the method, an electronic device can reduce visual distraction of a wallpaper as much as possible, maintain theme consistency between a lock screen wallpaper and a home screen wallpaper, support a user in personal expression, and improve overall user experience.

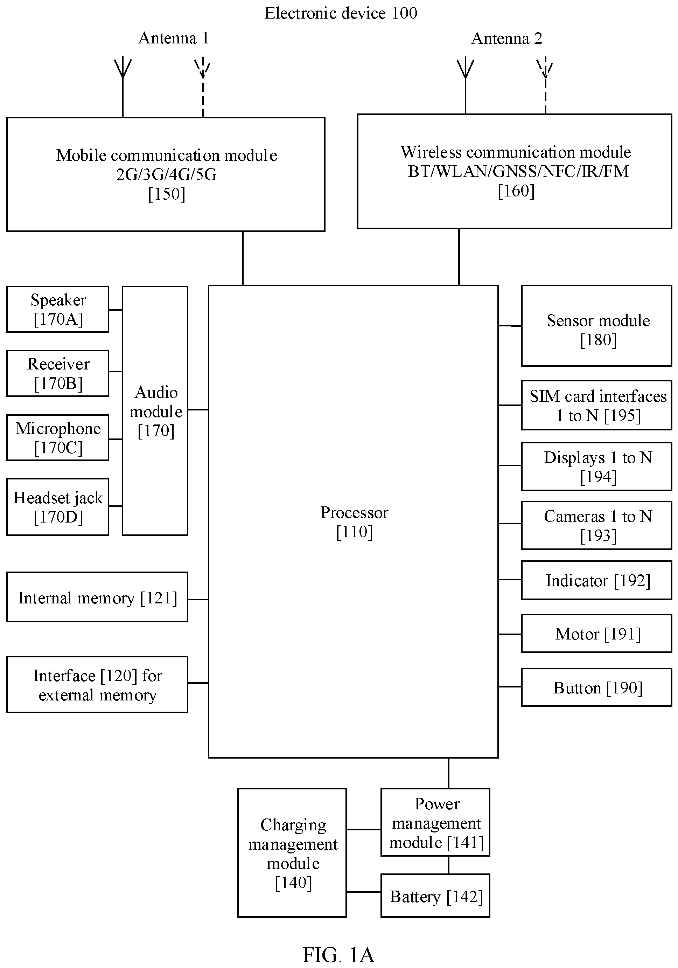

**FIG. 1A** **is a diagram of a structure of an electronic device 100.**

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery status of health (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a solution that is applied to the electronic device 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (which is not limited to the speaker 170A or the receiver 170B), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the electronic device 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on energy of the frequency.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Application such as intelligent cognition of the electronic device 100, for example, image identification, facial identification, speech identification, and text understanding, may be implemented through the NPU.

The interface 120 for external memory may be used to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage region and a data storage region. The program storage region may store an operating system, an application required by at least one function (for example, a sound playing function or an image playing function), and the like. The data storage region may store data (for example, audio data, and a phone book) created in a process of using the electronic device 100, and the like. In addition, the internal memory 121 may include a high-speed random access memory, and may further include a non-volatile memory, for example, at least one magnetic disk storage component, a flash memory component, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is also compatible with different types of SIM cards. The SIM card interface 195 is also compatible with an external storage card. The electronic device 100 interacts with a network through the SIM card, to implement functions such as a call and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

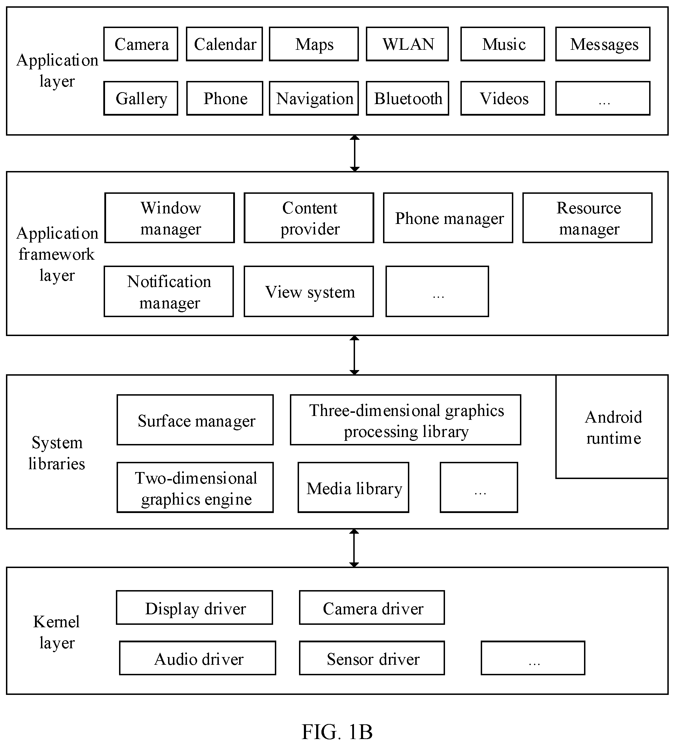

**FIG. 1B** **is a block diagram of the software structure of the electronic** device **100 according to an embodiment of this application.**

In the layered architecture, software is divided into several layers, and each layer has a clear role and task. The layers communicate with each other through a software interface. In some embodiments, the Android system is divided into four layers: an application layer, an application framework layer, Android runtime (Android runtime) and system libraries, and a kernel layer from top to bottom.

The application layer may include a series of application packages.

As shown in FIG. 1B, the application packages may include applications such as Camera, Gallery, Calendar, Phone, Maps, Navigation, WLAN, Bluetooth, Music, Video, and Messages.

The application framework layer provides an application programming interface (application programming interface, API) and a programming framework for the applications at the application layer. The application framework layer includes some predefined functions.

As shown in FIG. 1B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and so on.

The content provider is configured to store and obtain data, and enable the data to be accessed by an application. The data may include a video, an image, audio, calls that are made and received, a browsing history and a browsing bookmark, an address book, and the like.

The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification information may automatically disappear after a short pause without requiring a user interaction. For example, the notification manager is configured to notify download completion and provide a message prompt. The notification manager may alternatively provide a notification that appears in a top status bar of the system in a form of a graph or a scroll bar text, for example, a notification of an application running in a background, or may provide a notification that appears on the screen in a form of a dialog window. For example, text information is prompted in the status bar, a prompt tone is made, the electronic device vibrates, or an indicator light blinks.

Android runtime includes a kernel library and a virtual machine. Android runtime is responsible for scheduling and management of the Android system.

The kernel library includes two parts: a function that needs to be invoked in Java language and a kernel library of Android.

The application layer and the application framework layer are run on a virtual machine. The virtual machine executes Java files at the application layer and the application framework layer as binary files. The virtual machine is configured to implement functions such as object life cycle management, stack management, thread management, security and exception management, and garbage collection.

The system libraries may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of a camera application icon is used. The camera application invokes an interface of the application framework layer to enable the camera application, then enables the camera driver by invoking the kernel layer, and captures a static image or a video through the camera 193.

**The following describes an example of user interfaces in a wallpaper display process provided in embodiments of this application.**

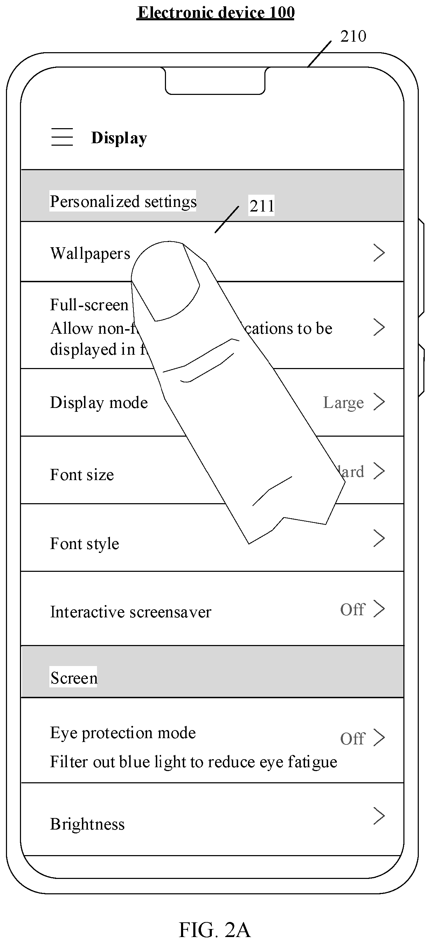

**FIG. 2A to FIG. 2E** **show an example of user interfaces related to determining a wallpaper element by the electronic device 100.**

FIG. 2A shows an example of a user interface 210. The user interface 210 may be a display setting page provided by a setting application. As shown in FIG. 2A, the user interface 210 includes a wallpaper control 211. The wallpaper control 211 is configured to trigger the electronic device 100 to display a user interface for a user to manage a wallpaper of the electronic device 100.

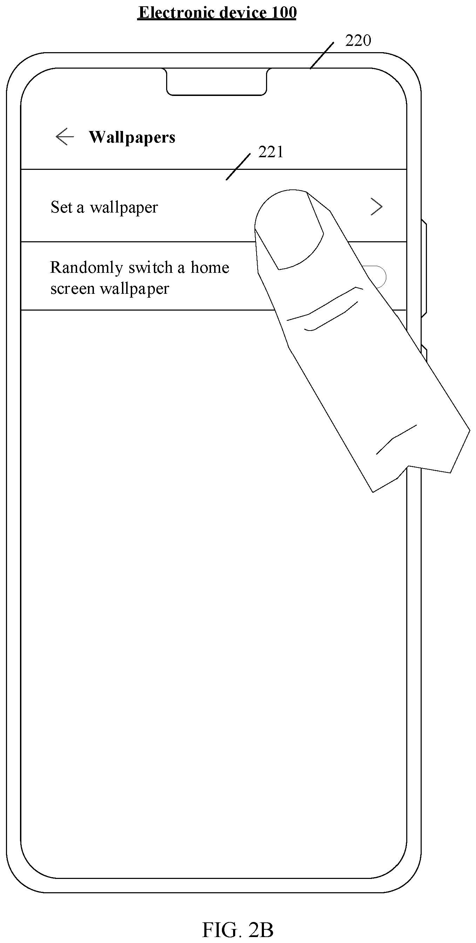

In response to a received input operation (for example, a touch operation) performed on the wallpaper control 211, the electronic device 100 may display a user interface 220 shown in FIG. 2B. The user interface 220 includes a setting control 221. The setting control 221 is configured to trigger the electronic device 100 to display a user interface for the user to set the wallpaper of the electronic device 100.

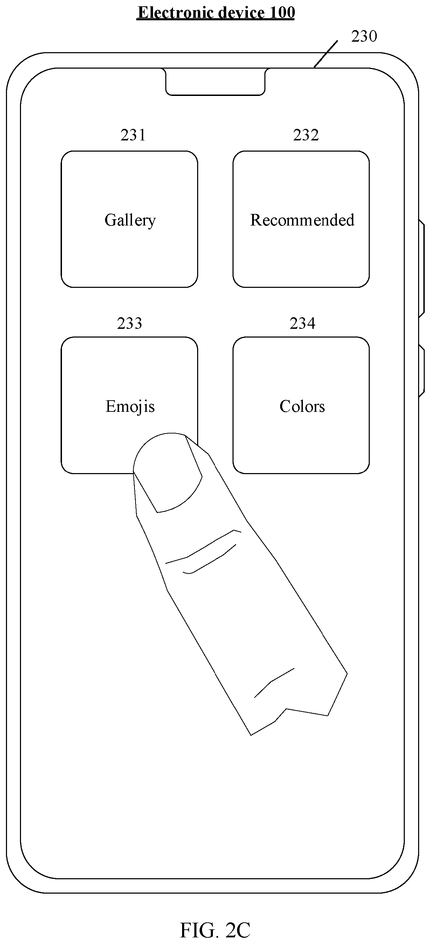

In response to a received input operation (for example, a touch operation) performed on the setting control 221, the electronic device 100 may display a user interface 230 shown in FIG. 2C. The user interface 230 is for the user to select a wallpaper type, and different wallpaper types correspond to different wallpaper generation manners. For example, the user interface 230 includes a type control 231 to a type control 234.

The type control 231 corresponds to a wallpaper type "gallery", and supports the user in selecting, in the gallery as a wallpaper, a photo taken or saved by the user.

The type control 232 corresponds to a wallpaper type "recommended", and supports the user in selecting, as a wallpaper, one of a series of pictures provided by the electronic device 100.

The type control 233 corresponds to a wallpaper type "emojis", and supports the user in selecting an emoji (emoji) as a wallpaper element and selecting a wallpaper template. The wallpaper element is a display element in a wallpaper. The wallpaper template indicates a placement manner of the wallpaper element in the wallpaper. The electronic device 100 may determine the wallpaper based on the wallpaper element and the wallpaper template that are selected by the user. This process is described in detail in subsequent embodiments of this application.

The type control 234 corresponds to a wallpaper type "colors", and supports the user in selecting a color and a color effect. The electronic device 100 may generate a wallpaper based on the color and the color effect that are selected by the user.

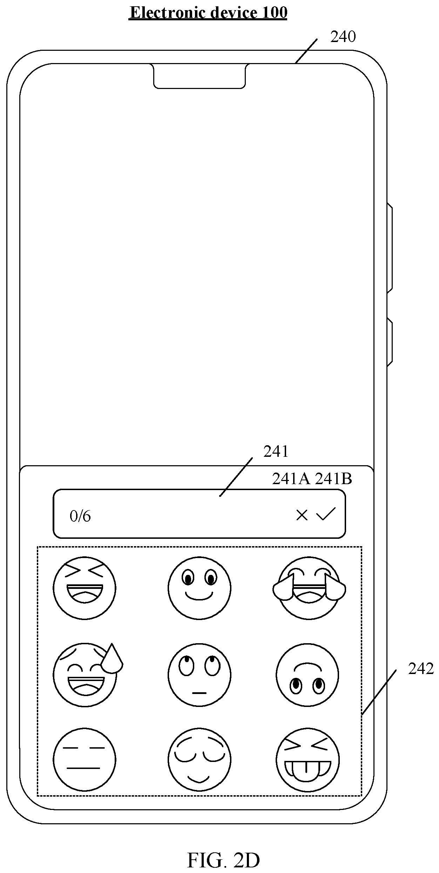

In response to a received input operation (for example, a touch operation) performed on the type control 233, the electronic device 100 may display a user interface 240 shown in FIG. 2D. The user interface 240 is for the user to select an emoji. The user interface 240 includes a preview box 241 and an emoji bar 242.

The preview box 241 is for the user to view and manage a selected emoji. The preview box 241 includes a delete button 241A and a confirm button 241B. The delete button 241A is used to trigger the electronic device 100 to delete the emoji selected by the user, and the confirm button 241B is used to trigger the electronic device 100 to determine, as the wallpaper element, the emoji selected by the user.

The emoji bar 242 is used to display emojis that can be selected by the user.

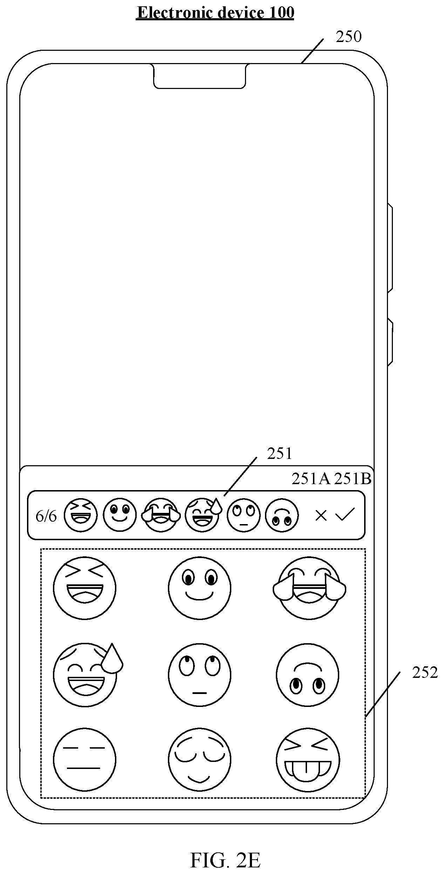

The user may select one or more emojis as wallpaper elements. For example, in response to input operations (for example, touch operations) performed on a plurality of emojis in the emoji bar 242, the electronic device 100 may display a user interface 250 shown in FIG. 2E. The user interface 250 includes a preview box 251 and an emoji bar 252. The preview box 251 includes a delete button 251A and a confirm button 251B. The preview box on the user interface 250 may display the plurality of emojis selected by the user. In addition, for descriptions of components on the user interface 250, refer to the descriptions of components on the user interface 240 in the foregoing embodiment. Details are not described herein again.

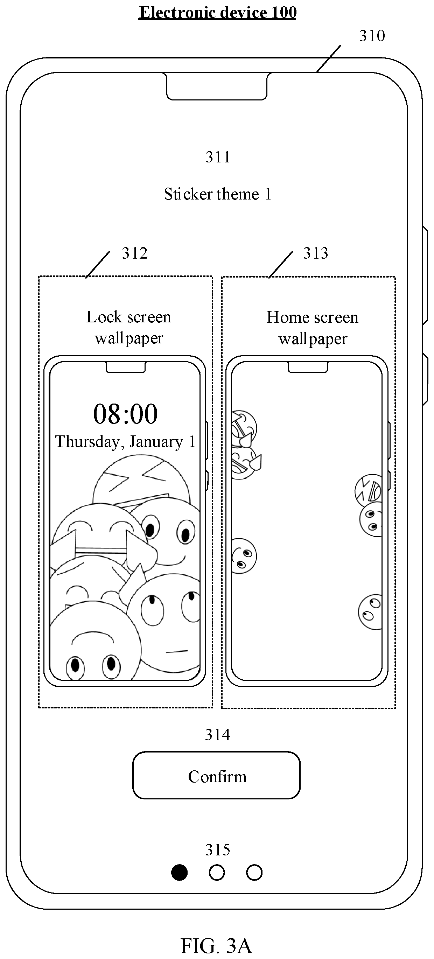

**FIG. 3A to FIG. 3C** **show an example of user interfaces related to determining a wallpaper template by the electronic device 100.**

The wallpaper template indicates a placement manner of a wallpaper element in a wallpaper. Based on different types of wallpapers to which wallpaper templates are applied, the wallpaper templates may be classified into a lock screen template and a home screen template. The lock screen template is a wallpaper template applied to a lock screen wallpaper, and the home screen template is a wallpaper template applied to a home screen wallpaper.

In response to an input operation (for example, a touch operation) performed by the user on the confirm button 251B on the user interface 250 shown in FIG. 2E, the electronic device 100 may determine, as wallpaper elements, the emojis displayed in the preview box 251, and display a user interface 310 shown in FIG. 3A. The user interface 310 is used to display a wallpaper template "sticker theme 1". As shown in FIG. 3A, the user interface 310 includes a title control 311, a lock screen wallpaper preview bar 312, a home screen wallpaper preview bar 313, a select button 314, and a page indication control 315.

The title control 311 indicates a name of the wallpaper template. The title control 311 may be implemented in a form of a text, a picture, or the like. A specific form of the title control 311 is not limited in embodiments of this application.

The lock screen wallpaper preview bar 312 and the home screen wallpaper preview bar 313 are separately used to display preview effects of a lock screen wallpaper and a home screen wallpaper that are determined by the electronic device 100 based on the wallpaper template "sticker theme 1" and the wallpaper elements.

The select button 314 is used to trigger the electronic device 100 to confirm the wallpaper template.

The page indication control 315 indicates a quantity of wallpaper templates provided by the electronic device 100 and a rank of the wallpaper templates.

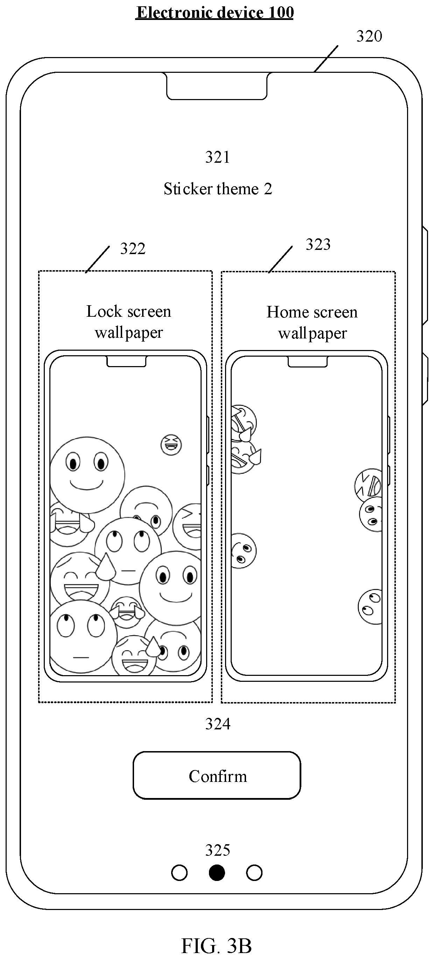

In response to a left-flick operation performed by the user on the user interface 310 shown in FIG. 3A, the electronic device 100 may display a user interface 320 shown in FIG. 3B. The user interface 320 is used to display a wallpaper template "sticker theme 2". As shown in FIG. 3B, the user interface 320 includes a title control 321, a lock screen wallpaper preview bar 322, a home screen wallpaper preview bar 323, a select button 324, and a page indication control 325. For descriptions of components on the user interface 320, refer to the descriptions of components on the user interface 310. Details are not described herein again.

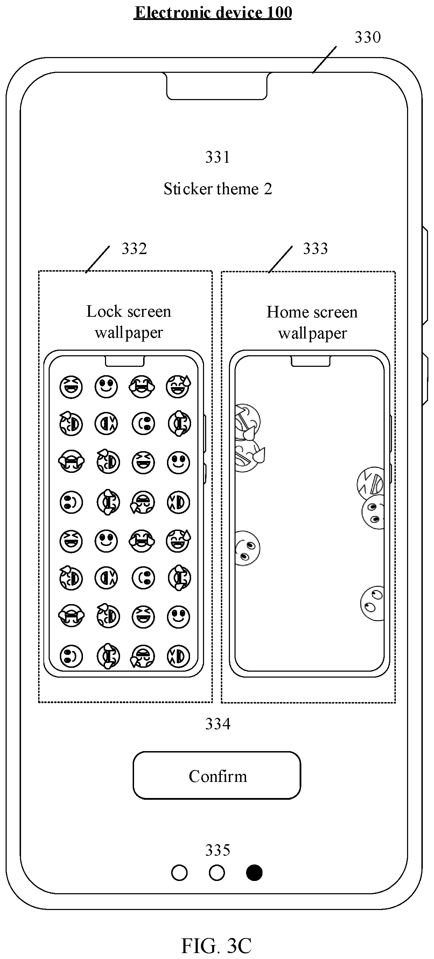

In response to a right-flick operation performed by the user on the user interface 320 shown in FIG. 3B, the electronic device 100 may display a user interface 330 shown in FIG. 3C. The user interface 310 is used to display a wallpaper template "array theme". As shown in FIG. 3C, the user interface 330 includes a title control 331, a lock screen wallpaper preview bar 332, a home screen wallpaper preview bar 333, a select button 334, and a page indication control 335.

In response to an input operation (for example, a touch operation) performed by the user on the select button 333 on the user interface 330 shown in FIG. 3C, the electronic device 100 may determine the "array theme" as the wallpaper template.

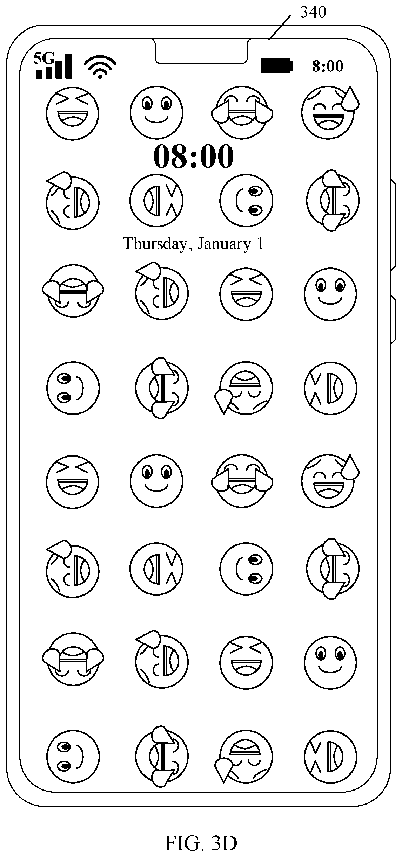

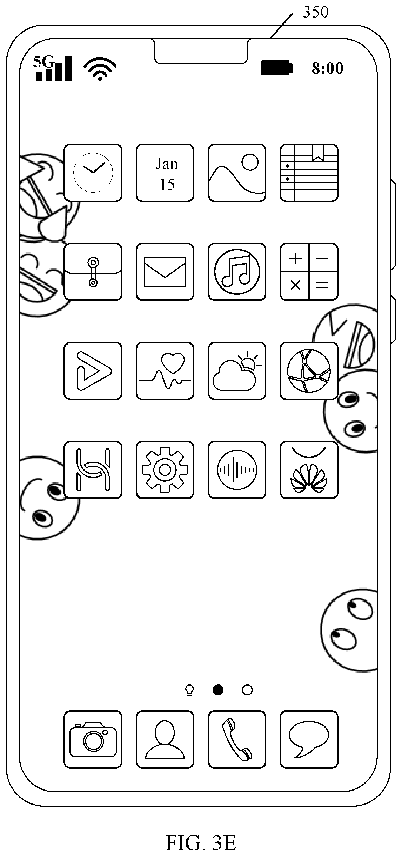

After determining the wallpaper elements and the wallpaper template, and obtaining a lock screen wallpaper and a home screen wallpaper based on the wallpaper elements and the wallpaper template, the electronic device 100 may display, in response to a lock screen instruction, a lock screen interface 340 shown in FIG. 3D. The lock screen interface 340 includes the lock screen wallpaper. In response to an unlock operation, the electronic device 100 may display a home screen interface 350 shown in FIG. 3E. The home screen interface includes the home screen wallpaper.

In a process in which a user interface displayed by the electronic device 100 changes from the lock screen interface 340 shown in FIG. 3D to the home screen interface 350 shown in FIG. 3E, six wallpaper elements are quickly moved from positions of the wallpaper elements on the lock screen interface 340 to positions of the wallpaper elements on the home screen interface 350. The positions of the six wallpaper elements on the home screen interface 350 are all close to side edges of the screen, three of the six wallpaper elements are close to a left side edge of the screen, and three of the six wallpaper elements are close to a right side edge of the screen.

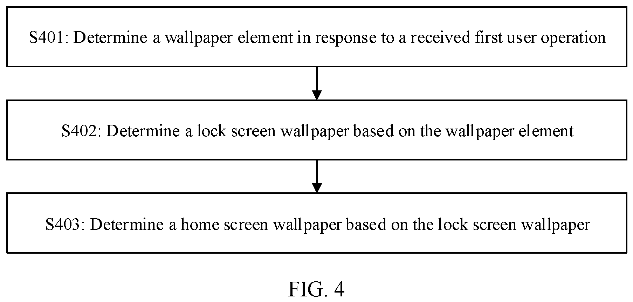

FIG. 4 is a flowchart of a wallpaper display method according to an embodiment of this application. The method may be applied to the electronic device 100. As shown in FIG. 4, the method includes the following steps.

**Step S401: Determine a wallpaper element in response to a received first user operation.**

The wallpaper element is a display element in a wallpaper, and may be implemented in a form of an emoji, an animation, a dynamic effect, a picture, or the like. A form of the display element is not specifically limited in embodiments of this application.

The first user operation is a user operation of selecting the wallpaper element. For example, the first user operation may be implemented as a touch operation performed by a user on one or more emojis in the emoji bar 242 on the user interface 240 shown in FIG. 2D, and a touch operation performed by the user on the confirm button 241B in the preview box 241 on the user interface 250 shown in FIG. 2E. In response to the first user operation, the electronic device 100 may determine the one or more emojis as wallpaper elements.

**Step S402: Determine a lock screen wallpaper based on the wallpaper element.**

The lock screen wallpaper is a wallpaper applied to a lock screen interface. The lock screen wallpaper may include a background and a foreground.

The background is a layer below the foreground. When the background and foreground overlap, content of the foreground in an overlapping region covers content of the background. A size of the background may be the same as a screen size of the electronic device 100. Content of the background may be implemented in a form of color fill, texture fill, or the like. A specific form of the background is not limited in embodiments of this application. In some implementations, the background of the lock screen wallpaper may be preset. In some other implementations, the electronic device 100 may determine the content of the background in the wallpaper based on the wallpaper element. Specifically, when the content of the background is implemented in the form of color fill, the electronic device 100 may determine an average value of colors of all wallpaper elements as a color of the background.

The foreground is a layer including one or more display elements. The display element includes the wallpaper element.

On the lock screen interface, some important content, including a status bar, a clock control, a bottom navigation bar, and the like, is usually displayed in a region close to an edge of the screen. Therefore, a lock screen template may limit a placement position of the wallpaper element in the wallpaper.

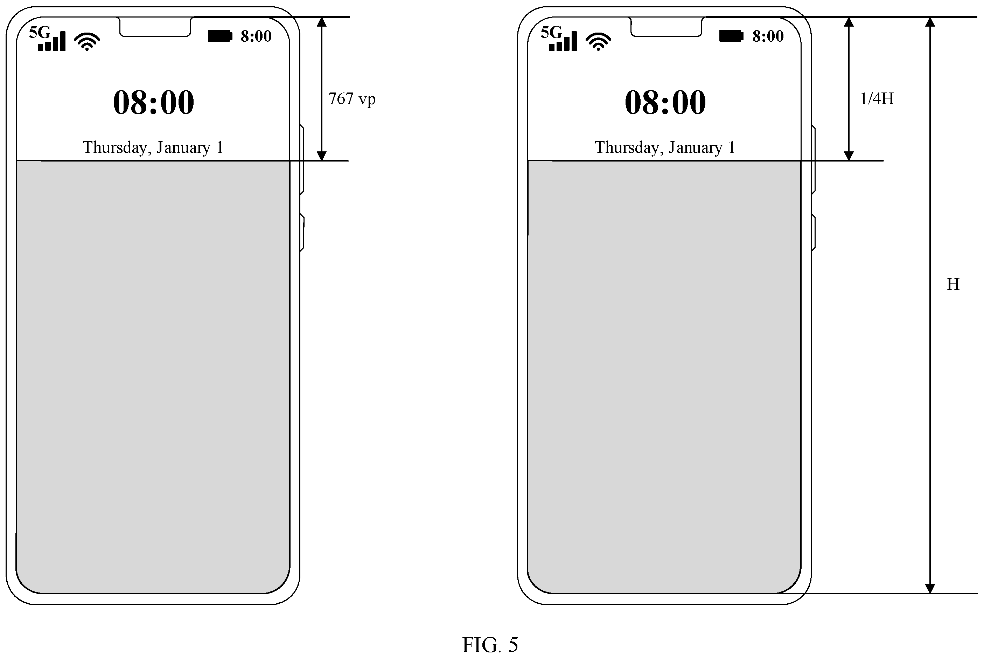

Specifically, as shown in FIG. 5, all wallpaper elements in the lock screen wallpaper may be limited to be placed in a first region. The first region may be a set of all points whose distances from a top edge and/or a bottom edge of the screen when the electronic device 100 is in a portrait mode are greater than or equal to a first preset value, and whose distances from a side edge of the screen when the electronic device 100 is in the portrait mode are greater than or equal to a second preset value. In some examples, the first preset value and/or the second preset value may be fixed values. For example, the first preset value may be 767 pixels, and the second preset value may be 50 pixels. In some other examples, the first preset value and/or the second preset value may be values related to a length of a top edge, a length of a bottom edge, and a length of a side edge of the screen when the electronic device 100 is in a portrait mode. For example, the first preset value may be 1/4 of the length of the side edge of the screen when the electronic device 100 is in the portrait mode; and the second preset value may be 1/12 of the length of the top edge and/or the length of the bottom edge of the screen when the electronic device 100 is in the portrait mode. According to the foregoing policy, visual distraction of the lock screen wallpaper can be effectively reduced.

In some implementations, the electronic device 100 may determine, based on the lock screen template, a placement manner of the wallpaper element in the foreground of the lock screen wallpaper.

The lock screen template may include one or more groups of parameters. Any group of parameters may correspond to one wallpaper element, and indicates a placement manner of the wallpaper element corresponding to the group of parameters in the foreground of the lock screen wallpaper. In some implementations, the lock screen template may be selected by the user. In some other implementations, the lock screen template may be determined by the electronic device 100.

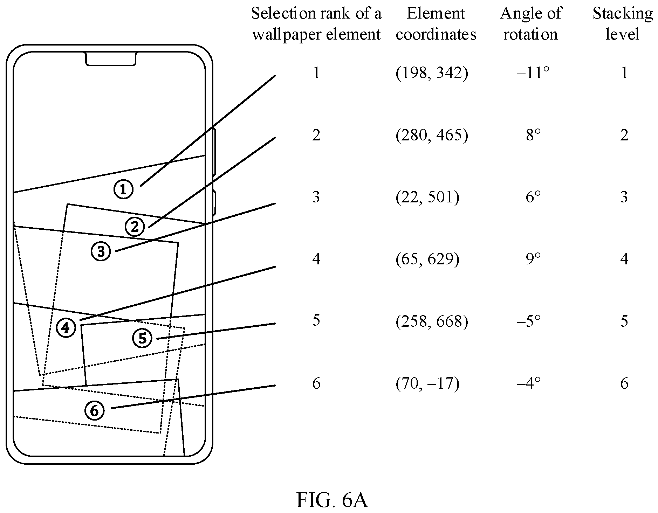

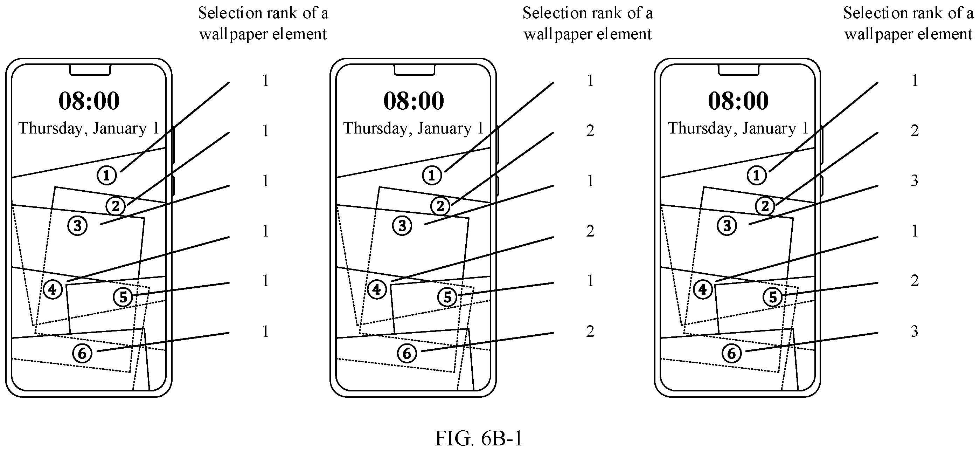

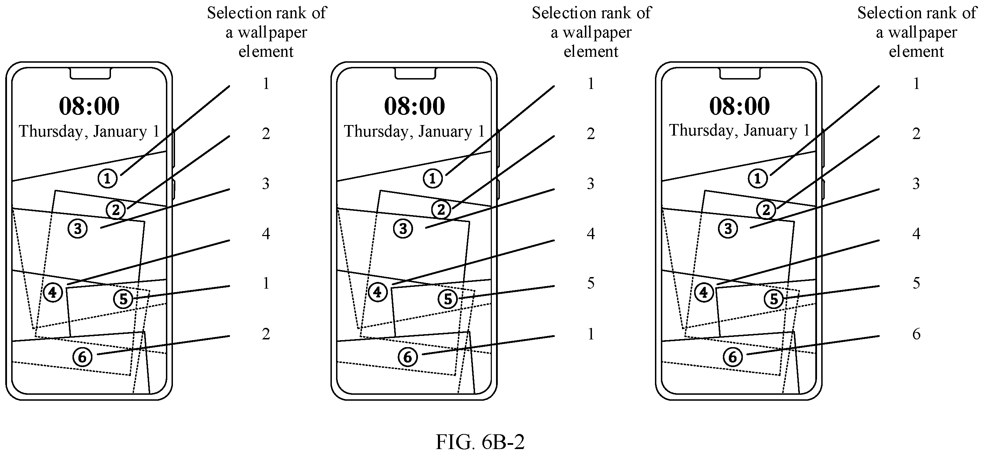

In some implementations, the lock screen template may indicate a wallpaper element corresponding to each group of parameters in the lock screen template. Specifically, the wallpaper element corresponding to each group of parameters in the lock screen template may be related to a selection rank of the wallpaper element. For example, as shown in FIG. 6A, the lock screen template includes six groups of parameters: a first group of parameters, a second group of parameters, ..., and a sixth group of parameters. The first group of parameters corresponds to a wallpaper element whose selection rank is 1, the second group of parameters corresponds to a wallpaper element whose selection rank is 2, ..., and the sixth group of parameters corresponds to a wallpaper element whose selection rank is 6.

In some implementations, for a same wallpaper template, if quantities of wallpaper elements are different, wallpaper elements corresponding to each group of parameters in the lock screen template may be different. For example, a lock screen template shown in FIG. 6B-1 and FIG. 6B-2 includes six groups of parameters: a first group of parameters, a second group of parameters, ..., and a sixth group of parameters.
(1) When a quantity of wallpaper elements is 1, in the lock screen template, the six groups of parameters may all correspond to a wallpaper element whose selection rank is 1.
(2) When a quantity of wallpaper elements is 2, in the lock screen template, the first group of parameters, a third group of parameters, and a fifth group of parameters may correspond to a wallpaper element whose selection rank is 1; and the second group of parameters, a fourth group of parameters, and the sixth group of parameters may correspond to a wallpaper element whose selection rank is 2.
(3) When a quantity of wallpaper elements is 3, in the lock screen template, the first group of parameters and a fourth group of parameters may correspond to a wallpaper element whose selection rank is 1; the second group of parameters and a fifth group of parameters may correspond to a wallpaper element whose selection rank is 2; and a third group of parameters and the sixth group of parameters may correspond to a wallpaper element whose selection rank is 3.
(4) When a quantity of wallpaper elements is 4, in the lock screen template, the first group of parameters and a fifth group of parameters may correspond to a wallpaper element whose selection rank is 1; the second group of parameters and the sixth group of parameters may correspond to a wallpaper element whose selection rank is 2; a third group of parameters may correspond to a wallpaper element whose selection rank is 3; and a fourth group of parameters may correspond to a wallpaper element whose selection rank is 4.
(5) When a quantity of wallpaper elements is 5, in the lock screen template, the first group of parameters and the sixth group of parameters may correspond to a wallpaper element whose selection rank is 1; the second group of parameters may correspond to a wallpaper element whose selection rank is 2; a third group of parameters may correspond to a wallpaper element whose selection rank is 3; a fourth group of parameters may correspond to a wallpaper element whose selection rank is 4; and a fifth group of parameters may correspond to a wallpaper element whose selection rank is 5.
(6) When a quantity of wallpaper elements is 6, in the lock screen template, the first group of parameters may correspond to a wallpaper element whose selection rank is 1, the second group of parameters may correspond to a wallpaper element whose selection rank is 2, ..., and the sixth group of parameters may correspond to a wallpaper element whose selection rank is 6.

In some other implementations, the wallpaper element corresponding to each group of parameters in the lock screen template may alternatively be randomly determined by the electronic device 100 from the wallpaper element.

A placement manner of the wallpaper element in the wallpaper may include one or more of the following: element coordinates, an element size, an angle of rotation, a stacking level, and a mirror status.

The element coordinates indicate a position of the wallpaper element in the wallpaper. For example, the element coordinates may be implemented as coordinates of a center point of the wallpaper element in a screen coordinate system. The screen coordinate system may be a two-dimensional coordinate system that uses a lower left corner of the screen of the electronic device 100 as an origin, uses a direction extending along the bottom edge of the screen as a horizontal axis, and uses a direction extending along the side edge of the screen as a vertical axis. For example, the element coordinates of the wallpaper element may be (198 pixels, 342 pixels).

The element size indicates a size of the wallpaper element in the wallpaper. In some implementations, the element size may be implemented as a magnification factor of an original size of the wallpaper element. For example, the element size may be five times the original size of the wallpaper element. In some other implementations, the element size may alternatively be implemented as a diameter of the wallpaper element. For example, the element of the wallpaper element may be 340 pixels.

The angle of rotation indicates a rotation direction and a rotation amount of the wallpaper element in the wallpaper. A value range may be -180° to 180°. For example, the angle of rotation of the wallpaper element may be -11°.

The stacking level indicates a level, in the wallpaper, of a layer at which the wallpaper element is located. A value range may be 1 to N, where N is a quantity of wallpaper elements. The stacking level determines a coverage relationship of a plurality of wallpaper elements when the plurality of wallpaper elements overlap. In the wallpaper, a wallpaper element with a higher stacking level covers a wallpaper element with a lower stacking level.

The mirror status may indicate whether the wallpaper element is placed in the wallpaper in a mirrored manner. A value may be "not mirrored", "horizontally mirrored", or "vertically mirrored".

FIG. 6A is used as an example. The lock screen template shown in FIG. 6A may include the six groups of parameters: the first group of parameters, the second group of parameters, ..., and the sixth group of parameters.

Element coordinates of the wallpaper element indicated by the first group of parameters are (198 pixels, 342 pixels), an angle of rotation is -11°, and a stacking level is 1.

Element coordinates of the wallpaper element indicated by the second group of parameters are (280 pixels, 465 pixels), an angle of rotation is 8°, and a stacking level is 2.

Element coordinates of a wallpaper element indicated by a third group of parameters are (22 pixels, 501 pixels), an angle of rotation is 6°, and a stacking level is 3.

Element coordinates of a wallpaper element indicated by a fourth group of parameters are (65 pixels, 629 pixels), an angle of rotation is 9°, and a stacking level is 4.

Element coordinates of a wallpaper element indicated by a fifth group of parameters are (258 pixels, 668 pixels), an angle of rotation is -5°, and a stacking level is 5.

Element coordinates of the wallpaper element indicated by the sixth group of parameters are (70 pixels, -17 pixels), an angle of rotation is -4°, and a stacking level is 6.

In addition, an element size of a wallpaper element indicated by each group of parameters is five times an original size of the wallpaper element, and a mirror status is "not mirrored".

Lock screen templates may be classified into two types: a sticker template and an array template.

FIG. 7A to FIG. 7D show examples of four different sticker templates, and the sticker templates have different features.

In some implementations, a foreground of a wallpaper may not only include a wallpaper element, but also include some other display elements, such as a picture, a shape line, a text, an animation, and a dynamic effect. Therefore, the sticker template may not only indicate a placement manner of a wallpaper element in a wallpaper, but also indicate a placement manner of a display element other than the wallpaper element in a foreground of the wallpaper.

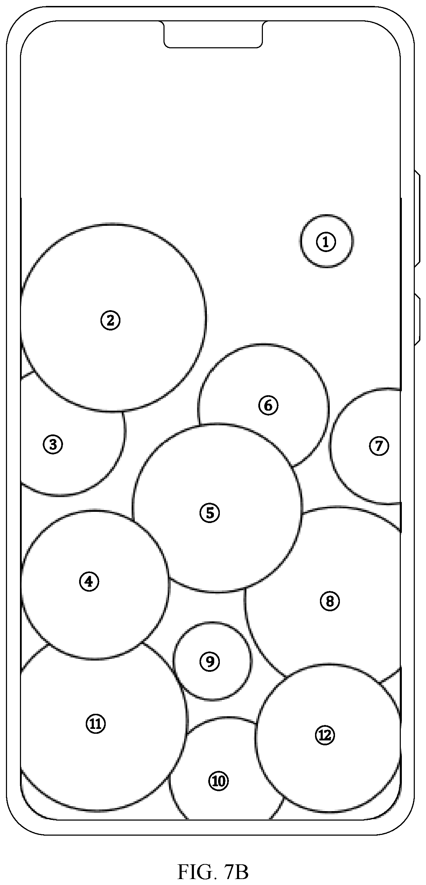

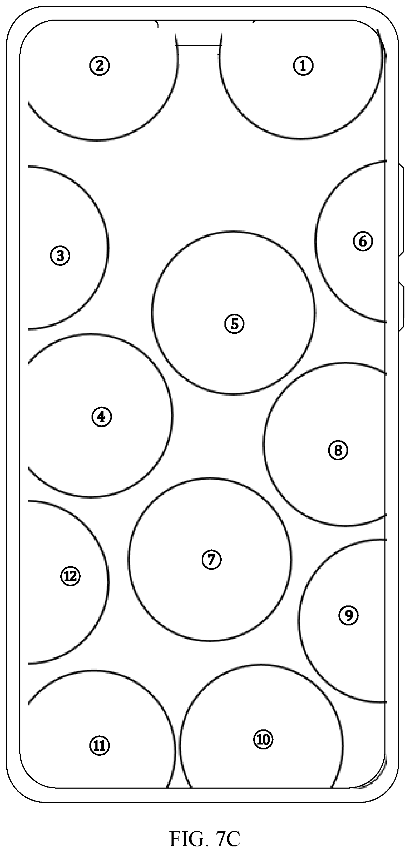

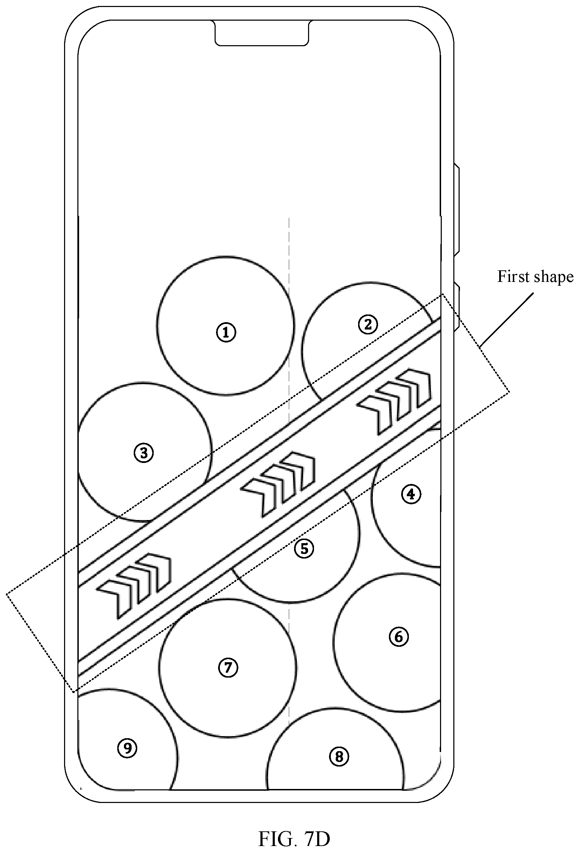

For example, as shown in FIG. 7D, the sticker template may include nine groups of parameters: a first group of parameters, a second group of parameters, ..., and a ninth group of parameters. The nine groups of parameters indicate a placement manner of a wallpaper element in a wallpaper. In addition, the sticker template may further indicate a placement manner of a first shape in the wallpaper. The first shape may be, for example, a shape including a plurality of straight lines and arrow symbols in FIG. 7. A placement manner of the first shape in a foreground of the lock screen wallpaper may be, for example, rotating the first shape clockwise by 45° by using a center of the shape as an axis, and placing the first shape at a center position of the wallpaper, where a stacking level is a highest level.

FIG. 8A to FIG. 8D show examples of four different array templates, and the array templates have different features.

In some implementations, the array template may indicate a wallpaper element to be placed in a foreground of a lock screen wallpaper in a grid form of an m*n array. Both m and n are integers. m is a quantity of columns of wallpaper elements in the array template, and n is a quantity of rows of wallpaper elements in the array template.

For example, as shown in FIG. 8A, the array template may indicate wallpaper elements to be placed in a wallpaper in a form of a 4*8 array.

In some implementations, the electronic device 100 may further determine, in another manner, the placement manner of the wallpaper element in the foreground of the lock screen wallpaper. The another manner may be, for example, random determining.

It may be understood that, regardless of a manner in which the electronic device 100 determines the wallpaper element, the wallpaper element in the lock screen wallpaper may be limited to be placed in the first region. For descriptions of the first region, refer to related descriptions in the foregoing embodiment. Details are not described herein again.

In some implementations, the wallpaper element usually includes some important regions. For example, for an emoji, an eye of the emoji is used as an important factor for identifying a type of the emoji, and may be used as an important region of the emoji. Because wallpaper elements are placed at different positions and at different stacking levels in the wallpaper, an important region in the wallpaper element may be located outside the screen or blocked. Therefore, to ensure a display effect of the wallpaper element, the electronic device 100 may perform fine-tunning after determining the placement manner of the wallpaper element in the foreground of the lock screen wallpaper, so that the important region in the wallpaper element is displayed. Specifically, a manner in which the electronic device 100 fine-tunes the placement manner of the wallpaper element in the wallpaper specifically includes: rotating the wallpaper element by using a shape center of the wallpaper element as an axis, and/or mirroring the wallpaper element. In some implementations, an angle range of rotation includes counterclockwise rotation from 0° to 45° and clockwise rotation from 0° to 45°.

When the wallpaper element is an emoji, an important region of the wallpaper element may include an eye region of the emoji. When the eye region of the emoji is blocked, the electronic device 100 may fine-tune the emoji, so that a displayed part of the eye region of the emoji in the wallpaper is greater than 1/2 of the entire eye region, and an eyeball region of the eye region of the emoji is not blocked.

For example, as shown in FIG. 9, when an emoji 1 and an emoji 2 overlap, and a stacking level of the emoji 1 is lower than a stacking level of the emoji 2, an eye region of the emoji 1 is blocked. In this case, the electronic device 100 may rotate the emoji 1 clockwise, so that a displayed part of the eye region of the emoji 1 in a wallpaper is greater than 1/2 of the entire eye region, and an eyeball region of the eye region of the emoji 1 is not blocked.

In some implementations, after the electronic device 100 fine-tunes the placement manner of the wallpaper element in the wallpaper according to the foregoing policy, if the important region in the wallpaper element still cannot be displayed, the electronic device 100 may further move the wallpaper element within a small range. A movement distance within the small range may be less than a fourth preset value, for example, 50 pixels.

In this way, the electronic device 100 may determine the lock screen wallpaper.

**Step S403: Determine a home screen wallpaper based on the lock screen wallpaper.**

The home screen wallpaper is a wallpaper applied to a home screen interface. Similar to the lock screen wallpaper, the home screen wallpaper may also include a background and a foreground. For descriptions of the background and the foreground, refer to related descriptions in the foregoing embodiment. Details are not described herein again.

In a process of determining the home screen wallpaper, the electronic device 100 may first determine the background of the home screen wallpaper. For descriptions of determining the background of the home screen wallpaper by the electronic device 100, refer to the descriptions of determining the background of the lock screen wallpaper by the electronic device 100 in the foregoing embodiment. Details are not described herein again.

In addition, the electronic device 100 may determine the foreground of the home screen wallpaper based on the foreground of the lock screen wallpaper. A process in which the electronic device 100 determines the foreground of the home screen wallpaper is specifically as follows:
**1. Determine a wallpaper element included in the foreground of the home screen wallpaper.**

The electronic device 100 may select one or more wallpaper elements from the foreground of the lock screen wallpaper as the wallpaper element included in the foreground of the home screen wallpaper.

Specifically, in some implementations, the screen of the electronic device 100 may be divided into a left region and a right region with respect to a central axis of the electronic device 100 in the portrait mode. A region on a left side of the central axis is the left region, and a region on a right side of the central axis is the right region. The electronic device 100 may separately select, as wallpaper elements in the home screen wallpaper, one or more wallpaper elements that are in the lock screen wallpaper and that are located in the left region and one or more wallpaper elements that are in the lock screen wallpaper and that are located in the left region.

For example, as shown in FIG. 10, the lock screen wallpaper includes 12 wallpaper elements: a lock screen element 1 to a lock screen element 12, where a lock screen element 2, a lock screen element 3, a lock screen element 4, a lock screen element 5, a lock screen element 9, and a lock screen element 11 are located in the left region, and the lock screen element 1, a lock screen element 6, a lock screen element 7, a lock screen element 8, a lock screen element 10, and the lock screen element 12 are located in the right region. The electronic device 100 may select the lock screen element 2, the lock screen element 5, and the lock screen element 11 from the left region and the lock screen element 6, the lock screen element 8, and the lock screen element 12 from the right region as wallpaper elements in the home screen wallpaper.

When the electronic device 100 is unlocked, a wallpaper displayed by the electronic device 100 may be switched from the lock screen wallpaper to the home screen wallpaper. In this process, for a wallpaper element that exists in both the lock screen wallpaper and the home screen wallpaper, position switching may be implemented in a manner of quickly moving the wallpaper element from a first position in the lock screen wallpaper to a second position in the home screen wallpaper. In the foregoing process, if a distance between the first position and the second position is excessively long, time required for moving the wallpaper element may be excessively long, and a speed and smoothness of wallpaper switching performed by the electronic device 100 are affected. Therefore, in some implementations, the wallpaper element selected by the electronic device 100 from the lock screen wallpaper may be a wallpaper element for which a distance between a center point of the wallpaper element and the side edge of the electronic device 100 in the portrait mode is less than a preset value. The preset value may be, for example, 2/5 of the length of the top edge of the electronic device 100 in the portrait mode.

**2. The electronic device 100 determines a placement manner, in the foreground, of each wallpaper element in the home screen wallpaper.**

On the home screen interface, some important content, including a status bar, an application icon, a folder, a widget, a bottom navigation bar, and the like, is usually displayed in a center region of the screen and a region close to the top edge and/or the bottom edge of the screen. Therefore, a home screen template may limit a placement position of the wallpaper element in the home screen wallpaper.

Specifically, the home screen template may limit that all wallpaper elements are placed in a second region.

In some implementations, the second region may be a preset region. As shown in FIG. 11A, the second region may be a set of all points whose distances from the side edge of the screen when the electronic device 100 is in the portrait mode are less than or equal to a third preset value, and/or whose distances from the top edge and/or the bottom edge of the screen when the electronic device 100 is in the portrait mode are greater than or equal to a fourth preset value. In some implementations, the third preset value and/or the fourth preset value may be fixed values. For example, both the third preset value and the fourth preset value may be 50 pixels. In some other implementations, the third preset value and/or the fourth preset value may be values related to the length of the side edge, the length of the top edge, or the length of the bottom edge of the screen of the electronic device 100. For example, the third preset value may be 1/10 of the length of the top edge or the length of the bottom edge of the screen, and the fourth preset value may be 1/12 of the length of the side edge of the screen of the electronic device 100. According to the foregoing policy, visual distraction of the home screen wallpaper can be effectively reduced.

In some other implementations, the electronic device 100 may determine the second region based on a layout of an icon on the home screen interface. The icon may include an application icon, a folder, a widget, a status bar, a card, and the like. Specifically, as shown in FIG. 11B, the second region may include a region other than placement regions of various icons on the home screen interface.

For any wallpaper element that exists in both the lock screen wallpaper and the home screen wallpaper, the electronic device 100 may determine, based on a placement manner of the wallpaper element in the foreground of the lock screen wallpaper, a placement manner of the wallpaper element in the foreground of the home screen wallpaper.

Specifically, in some implementations, if the wallpaper element is located in the left region in the lock screen wallpaper, the electronic device 100 may determine that the wallpaper element is also located in the left region in the home screen wallpaper. Similarly, if the wallpaper element is located in the right region in the lock screen wallpaper, the electronic device 100 may determine that the wallpaper element is also located in the right region in the home screen wallpaper.

In some implementations, the electronic device 100 may determine a position height of the wallpaper element in the foreground of the lock screen wallpaper as a position height of the wallpaper element in the foreground of the home screen wallpaper.

In addition, as described above, when the electronic device 100 is unlocked, the wallpaper displayed by the electronic device 100 may be switched from the lock screen wallpaper to the home screen wallpaper. In this process, for the wallpaper element that exists in both the lock screen wallpaper and the home screen wallpaper, position switching may be implemented in the manner of quickly moving the wallpaper element from the first position in the lock screen wallpaper to the second position in the home screen wallpaper. To prevent movement paths of wallpaper elements from being staggered and affecting a visual effect, based on the foregoing implementations, a height rank of the wallpaper elements in a region in which the wallpaper elements are located in the lock screen wallpaper is the same as a height rank of the wallpaper elements in a region in which the wallpaper elements are located in the home screen wallpaper.

In some implementations, the electronic device 100 may limit an overlapping area between wallpaper elements in the foreground of the home screen wallpaper. For example, when sizes of regions occupied by all wallpaper elements in the home screen wallpaper are the same, the electronic device 100 may require that an overlapping area between the wallpaper elements is less than or equal to 40% of an area of the regions occupied by the wallpaper elements in the home screen wallpaper.

A screen exposure ratio of the wallpaper element may be a ratio of an area of a displayed part of the wallpaper element on the screen to an overall area of the wallpaper element. In some implementations, the electronic device 100 may limit a screen exposure ratio of each wallpaper element in the home screen wallpaper. For example, the electronic device 100 may require that the screen exposure ratio of each wallpaper element is greater than or equal to 55% of the overall area of the wallpaper element and less than or equal to 70% of the overall area of the wallpaper element.

In this way, the electronic device 100 may determine the home screen wallpaper.

Then, when the electronic device 100 is in an always-on display state or a locked state, the electronic device 100 may display the lock screen interface, where the lock screen interface includes the lock screen wallpaper. In response to an unlock instruction, the electronic device 100 may display the home screen interface, where the home screen interface includes the home screen wallpaper. In a process in which a displayed user interface is switched from the lock screen interface to the home screen interface, one or more wallpaper elements in the lock screen interface may be quickly moved from a position of the one or more wallpaper elements in the lock screen interface to a position of the one or more wallpaper elements in the home screen interface, where the position of the one or more wallpaper elements in the home screen interface is close to the side edge of the screen.

In this way, the electronic device 100 can reduce visual distraction of the wallpaper as much as possible, maintain theme consistency between the lock screen wallpaper and the home screen wallpaper, support the user in personal expression, and improve overall user experience.

In some implementations, each time before displaying the home screen interface, the electronic device 100 may re-determine the home screen wallpaper by performing step S403, to update the home screen wallpaper. Therefore, each time the electronic device 100 displays the home screen interface, the home screen wallpaper in the home screen interface may be different, which brings rich and changeable visual experience to the user.

## Claims

1. A wallpaper display method, wherein the method is applied to an electronic device, and the method comprises:
displaying a first interface, wherein the first interface comprises one or more wallpaper elements, and the one or more wallpaper elements are located in a first region; and
displaying a home screen in response to an unlock instruction, wherein in a process of displaying the home screen, a home screen wallpaper element in the one or more wallpaper elements is moved from the first region to a second region, wherein the second region is one or more regions close to a side edge of a screen, and the home screen wallpaper element is all or a part of wallpaper elements in the one or more wallpaper elements.

2. The method according to claim 1, wherein
the home screen wallpaper element is determined based on a position of the one or more wallpaper elements in the first region.

3. The method according to claim 1 or 2, wherein
a position of the home screen wallpaper element in the first region and a position of the home screen wallpaper element in the second region are located on a same side of the screen.

4. The method according to any one of claims 1 to 3, wherein
the home screen wallpaper element comprises a first wallpaper element and a second wallpaper element; and
if a position of the first wallpaper element in the first region is higher than a position of the second wallpaper element in the first region, a position of the first wallpaper element in the second region is also higher than a position of the second wallpaper element in the second region; or
if a position of the first wallpaper element in the first region is lower than a position of the second wallpaper element in the first region, a position of the first wallpaper element in the second region is also lower than a position of the second wallpaper element in the second region.

5. The method according to any one of claims 1 to 4, wherein
the home screen wallpaper element is in a partially displayed state in the second region; and/or
the home screen wallpaper elements are in an overlapping display state.

6. The method according to claim 5, wherein that the home screen wallpaper element is in the partially displayed state in the second region specifically comprises:
a display area of the home screen wallpaper element in the second region is greater than or equal to a first value, and/or less than or equal to a second value.

7. The method according to claim 5 or 6, wherein that the home screen wallpaper elements are in the overlapping display state specifically comprises:
an overlapping area between the home screen wallpaper elements is less than a third value.

8. The method according to any one of claims 1 to 7, wherein the second region is determined based on a layout of an icon displayed on the home screen, so that the home screen wallpaper element does not block the icon on the home screen as much as possible when being displayed in the second region, and the icon comprises an application icon, and/or a folder, and/or a widget, and/or a card.

9. The method according to any one of claims 1 to 8, wherein before displaying the first interface, the method further comprises:
determining the wallpaper element in response to a user operation of selecting the wallpaper element; and
determining the first interface based on the wallpaper element and a wallpaper template, wherein the wallpaper template is used to determine the one or more wallpaper elements and a position of the one or more wallpaper elements on the first interface based on a selection rank of the wallpaper element.

10. The method according to claim 9, wherein the method further comprises:
if an important region of the wallpaper element is blocked, rotating the wallpaper element by using a center of the wallpaper element as an axis, and/or mirroring the wallpaper element, and/or translating the wallpaper element, so that the important region of the wallpaper element is displayed in the first region.

11. An electronic device, wherein the electronic device comprises a memory, a processor, and a sensor, the memory is configured to store a computer program, and the processor is configured to invoke the computer program to enable the electronic device to perform the method according to any one of claims 1 to 10.

12. A computer program product comprising instructions, wherein when the computer program product runs on an electronic device, the electronic device is enabled to perform the method according to any one of claims 1 to 10.

13. A computer-readable storage medium, comprising instructions, wherein when the instructions are run on an electronic device, the electronic device is enabled to perform the method according to any one of claims 1 to 10.
